# EUROPEAN PATENT APPLICATION

(11) **EP 4 420 838 A1**
(43) Date of publication of application: **28.08.2024**
(21) Application number: 22883644.1
(22) Date of filing: 20.10.2022
(51) Int. Cl.: B25J 9/16, B25J 9/22

(54) **INFORMATION PROCESSING DEVICE, ROBOT CONTROLLER, ROBOT CONTROL SYSTEM, AND INFORMATION PROCESSING METHOD**

(30) Priority: 20.10.2021 JP 2021171765
(71) Applicant: Kyocera Corporation, Kyoto-shi Kyoto 612-8501 (JP)
(72) Inventor: TOMIIE Norio, Kyoto-shi, Kyoto 612-8501 (JP)
(74) Representative: TBK
(86) International application number: PCT/JP2022/039185
(87) International publication number: WO 2023/068341

(57) **Abstract**

An information processing device includes a controller and a memory. The memory records at least one control program to control a robot. The controller estimates at least one first control program to control a first robot under control from the at least one control program on the basis of first position information indicating an installation location of the first robot.

## Description

### CROSS-REFERENCE TO RELATED APPLICATIONS

This application claims priority based on Japanese Patent Application No. 2021-171765 (filed October 20, 2021), the entire disclosure of which is hereby incorporated by reference.

### TECHNICAL FIELD

The present disclosure relates to an information processing device, a robot controller, a robot control system, and an information processing method.

### BACKGROUND OF INVENTION

A known device in the related art causes a robot to perform a group of tasks even if instructions from a user are lacking (see Patent Literature 1 for example).

### CITATION LIST

### PATENT LITERATURE

Patent Literature 1: Japanese Unexamined Patent Application Publication No. 2021-30407

### SUMMARY

In an embodiment of the present disclosure, an information processing device includes a controller and a memory. The memory records at least one control program to control a robot. The controller estimates at least one first control program to control a first robot under control from the at least one control program on the basis of first position information indicating an installation location of the first robot.

In an embodiment of the present disclosure, a robot controller executes the first control program outputted from the information processing device.

In an embodiment of the present disclosure, a robot control system includes the information processing device, the robot controller, and the robot.

In an embodiment of the present disclosure, an information processing method is executed by an information processing device. The information processing method includes estimating at least one first control program from at least one control program to control a robot which is recorded in the information processing device. The estimating is based on first position information indicating an installation location of the first robot. The control program controls a first robot under control.

### BRIEF DESCRIPTION OF THE DRAWINGS

FIG. 1 is a schematic diagram illustrating a configuration example of a robot control system according to an embodiment.
FIG. 2 is a block diagram illustrating an example of the configuration of a robot control system according to an embodiment.
FIG. 3 is a diagram illustrating an example of operation history data.
FIG. 4 is a flowchart illustrating an example of a procedure to estimate a first control program on the basis of position information.
FIG. 5 is a flowchart illustrating an example of a procedure to estimate a first control program on the basis of in-progress information.

### DESCRIPTION OF EMBODIMENTS

### (Overview of robot control system 1)

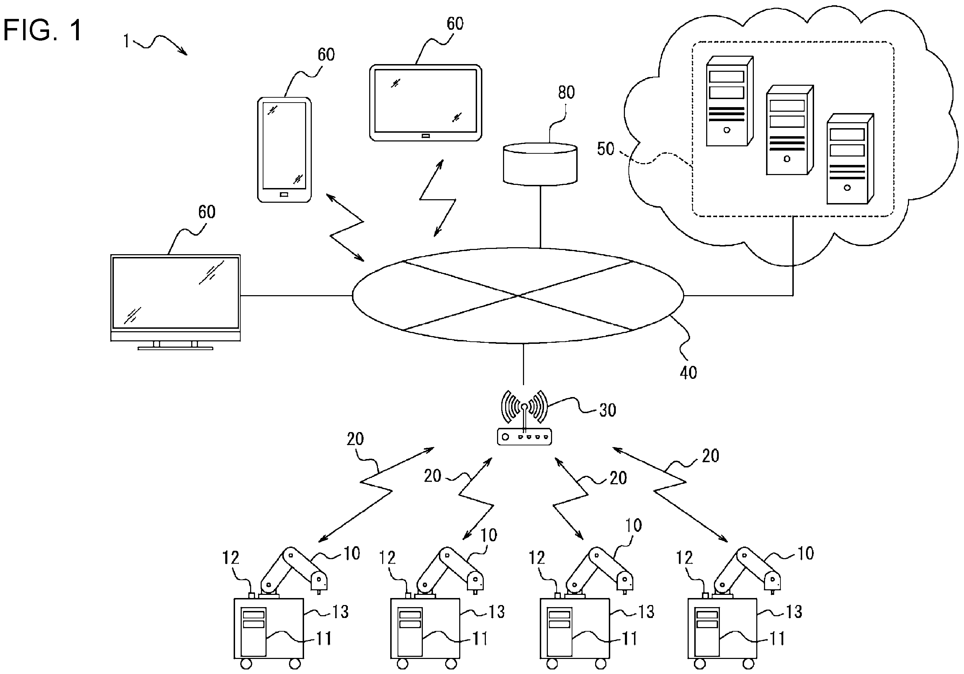

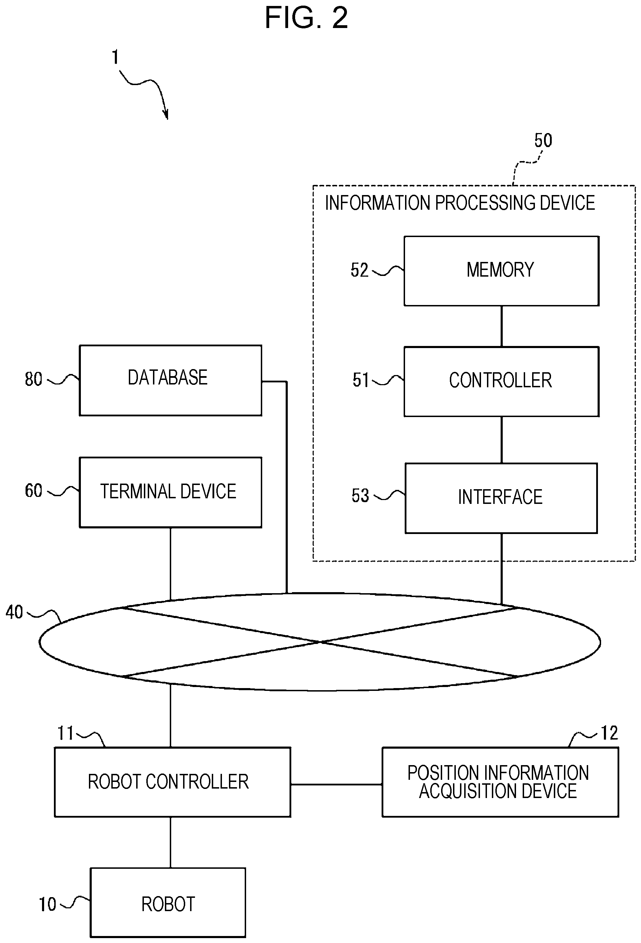

As illustrated in FIGs. 1 and 2, in one embodiment, a robot control system 1 includes an information processing device 50, a database 80, at least one terminal device 60, at least one robot 10, and at least one robot controller 11. As described later, the information processing device 50 determines a program to control the action of the robot 10. As described later, the database 80 stores information such as a program to control the action of the robot 10. The robot controller 11 can control the robot 10 to perform a certain task. For example, the robot 10 may perform a task of moving or machining a workpiece as the certain task. The robot 10 may be configured to be mobile by being mounted on a platform 13, for example. The platform 13 may move to a destination, and the robot 10 may perform a task at the destination. The robot 10 may also be fixed in place at a certain position. The robot 10, the robot controller 11, or the platform 13 includes a position information acquisition device 12 that acquires position information about the robot 10.

The robot controller 11 executes a program to control the action of the robot 10, and thereby causes the robot 10 to perform a certain task. A program to control the action of the robot 10 may be created as a user actually manipulates the robot 10, for example. A program to control the action of the robot 10 may also be created using a robot simulator or the like. In this case, a program to control the action of the robot 10 may be created while not connected to a network 40 (while offline), for example. A program to control the action of the robot 10 is saved in the robot controller 11 or the information processing device 50. A program to control the action of the robot 10 is also referred to as a control program.

The robot 10 performs a task by acting according to a certain processing pattern. A processing pattern is represented as an action or combination of actions by which the robot 10 achieves a designated task. For example, a processing pattern may be represented as a combination of an action to grasp a workpiece, an action to convey the grasped workpiece, and an action to place the conveyed workpiece in a certain position. A task is assumed to be a concept defining a goal to be achieved by performing a series of actions included in a processing pattern. As an example, a task may be a concept defining the goal of carrying a workpiece from point A to point B. As another example, a task may be a concept defining the goal of placing a workpiece at point C. As another example, a task may be a concept defining the goal of combining a workpiece with another object. A processing pattern may be a combination of actions by which the robot 10 accomplishes a task. A control program may be a group of commands causing the robot 10 to perform an action or the like represented by at least one processing pattern so that the robot 10 can accomplish a task.

When causing the robot 10 to perform a single task, a single control program corresponding to the task to be performed is prepared in advance. A plurality of control programs may also be prepared in advance, such as when the robot 10 is accomplish a task according to a plurality of control programs, or when causing the robot 10 to perform a plurality of tasks. The user causes the robot 10 to perform a task by selecting a control program corresponding to the desired task that the robot 10 is to perform, and giving an instruction to the robot controller 11.

An increase in the number of control programs that have been prepared in advance may increase the burden on the user to select a control program. For example, the user may spend much time in searching for the control program corresponding to the desired task that the robot 10 is to perform. The user might also select the wrong control program.

If the robot 10 is a mobile cooperative robot, the robot control system 1 causes the robot 10 to move to a worksite where the robot 10 is needed and perform a task at the worksite, as needed. Cooperative tasks include tasks performed by a human and the robot 10 working together, tasks performed by robots 10 working together, or tasks performed by the robot 10 and another machine working together. Cooperative tasks include collaborative tasks performed by a human and the robot 10 working together. If the robot 10 is a mobile cooperative robot, a control program corresponding to the task that the robot 10 is to perform at the destination the robot 10 moves to must be selected every time the robot 10 moves. As a result, the user may spend much time in searching for a control program every time the user causes the robot 10 to move.

The information processing device 50 of the robot control system 1 acquires robot information pertaining to the robot 10 under control. Robot information pertaining to the robot 10 under control may include not only information about the robot 10 itself that is under control, but also information about a robot of the same and/or similar type as the robot 10 under control. The robot 10 under control is also referred to as the first robot simply for the sake of distinction. Robot information pertaining to the first robot is also referred to as first robot information simply for the sake of distinction. A control program that the robot controller 11 executes to cause the first robot to perform a task is also referred to as the first control program simply for the sake of distinction. The first control program may be estimated on the basis of the first robot information, as described later. The first robot information may include information about a robot of the same and/or similar type as the first robot. A robot of the same and/or similar type as the first robot may include a robot of the same product as the first robot or a robot with the same number of operating axes as the first robot, for example. In other words, the first robot information may include information about the first robot or a robot of the same and/or similar type as the first robot. The first robot or a robot of the same and/or similar type as the first robot is also referred to as a related robot.

In the robot control system 1, the information processing device 50 of the robot control system 1 may acquire setting data for the first robot as the first robot information. Setting data is data pertaining to the first robot that is set during use of the first robot, for example. Setting data may also be, for example, data pertaining to settings of the first robot itself, such as a user, a time of use, or an installation position of the first robot. Setting data may also be, for example, data that can be changed each time the first robot is used, or data that can be set by a simple user of the first robot who is not an administrator. Setting data may also be, for example, attribute information about the first robot, including information identifying the first robot. Setting data may also be data that can be compared to operation data described later.

In one embodiment according to the present disclosure, the information processing device 50 of the robot control system 1 may acquire position information specifying an installation location of the first robot as setting data. Position information specifying an installation location of the first robot is also referred to as first position information. The information processing device 50 of the robot control system 1 uses the first position information as a basis for estimating at least one first control program to be executed by the robot controller 11 to cause the first robot to perform a task.

The information processing device 50 of the robot control system 1 may acquire operation data about a related robot, including the first robot or a robot of the same and/or similar type as the first robot, as the first robot information. For example, the information processing device 50 may acquire position information specifying a position where a related robot, including the first robot or a robot of the same and/or similar type as the first robot, is to operate. A position where a related robot, including the first robot or a robot of the same and/or similar type as the first robot, is to operate is also referred to as the first operation position. Position information specifying a position (first operation position) where a related robot is to operate is also referred to as first operation position information. First operation position information may include position information specifying a position (first past position) where a related robot had been installed in the past. Position information specifying a first past position is also referred to as first past position information. First operation position information may include position information specifying a user-set position (first set position) where a related robot is to operate. The first set position may be set by a user. Position information specifying a first set position is also referred to as first set position information. Note that the robot about which to acquire operation data may be operation data about the first robot itself that is expected to be used, and may also be operation data about a robot of the same and/or similar type as the first robot that is expected to be used. In other words, the information processing device 50 may acquire operation data about the first robot for which setting data is acquired, and may also acquire operation data about a robot of the same and/or similar type as the first robot about for setting data is acquired.

The information processing device 50 of the robot control system 1 can use the first robot information as a basis for estimating at least one first control program to be executed by the robot controller 11 to cause the first robot to perform a task. The information processing device 50 of the robot control system 1 can estimate at least one first control program on the basis of setting data for the first robot and operation data about a related robot, including the first robot or a robot of the same and/or similar type as the first robot. More specifically, the information processing device 50 can estimate at least one first control program by comparing setting data and operation data.

Specifically, in one embodiment according to the present disclosure, the information processing device 50 of the robot control system 1 can use first position information and first operation position information as a basis for estimating at least one first control program to be executed by the robot controller 11 to cause the first robot to perform a task. The information processing device 50 of the robot control system 1 first robot information different from the first position information, and the first operation position information as a basis for estimating at least one first control program to be executed by the robot controller 11 to cause the first robot to perform a task.

According to this embodiment, by acting as described above, the information processing device 50 of the robot control system 1 can acquire first robot information and estimate a control program to cause the robot 10 under control (the first robot) to perform a task. The information processing device 50 of the robot control system 1 can perform the estimation even when a plurality of control programs are recorded in a memory 52 of the information processing device 50, a separate storage device, or the like. In the case where the information processing device 50 of the robot control system 1 acquires first position information and the robot 10 is a robot that performs a task by being moved to a required location as needed, the information processing device 50 of the robot control system 1 can extract a control program when the robot 10 is installed at a worksite. This arrangement may alleviate the burden on the user to select a control program. This arrangement may also lower the possibility of the user selecting the wrong control program.

The following describes an example of the configuration of the robot control system 1 according to this embodiment.

### (Example of configuration of robot control system 1)

At least two configuration portions of the robot control system 1 are communicatively connected to each other through a network 40. At least two configuration portions of the robot control system 1 may also be communicatively connected without going through the network 40. At least two configuration portions of the robot control system 1 may be communicatively connected in a wired or wireless way. At least two configuration portions of the robot control system 1 may be communicatively connected through a dedicated channel. At least two configuration portions of the robot control system 1 are not limited to these examples, and may be communicatively connected to each other in any of various other forms.

The information processing device 50 and the robot controller 11 are communicatively connected through a gateway device 30 in FIG. 1. However, the information processing device 50 and the robot controller 11 may also be communicatively connected through a wireless base station, and may also be communicatively connected without going through the gateway device 30 or the wireless base station. The gateway device 30 refers to a radio that connects terminals with wireless connectivity functions to each other and to another network 40. The robot controller 11 may also be communicatively interconnected through a local network 20. The local network 20 may be established by the gateway device 30 or by another communicate device.

The information processing device 50 and the terminal device 60 are not limited to three of each as exemplified in FIG. 1, and may also number two or fewer, or number four or more. The number of combinations of the robot 10 and the robot controller 11 is not limited to four combinations as illustrated by way of example, and may also number three or fewer combinations, or five or more combinations. One robot controller 11 may control one robot 10 as illustrated by way of example. One robot controller 11 may also control two or more robots 10.

The following describes each configuration portion specifically.

### <Information processing device 50>

The information processing device 50 includes a controller 51, a memory 52, and an interface 53. The information processing device 50 is communicatively connected to the network 40 through the interface 53.

The controller 51 may include at least one processor to achieve various functions of the information processing device 50. The processor may execute a program to achieve the various functions of the information processing device 50. The processor may be achieved as a single integrated circuit. An integrated circuit is also referred to as an IC. The processor may be achieved as a plurality of communicatively connected integrated circuits and discrete circuits. The processor may include a central processing unit (CPU). The processor may include a digital signal processor (DSP) or a graphics processing unit (GPU). The processor may be achieved on the basis of any of various other known technologies.

The information processing device 50 further includes the memory 52. The memory 52 may include an electromagnetic storage medium such as a magnetic disk, or a memory such as semiconductor memory or magnetic memory. The memory 52 may be configured as a hard disk drive (HDD) or as a solid-state drive (SSD). The memory 52 stores various information, programs to be executed by the controller 51, and the like. The memory 52 may function as a working memory of the controller 51. At least a portion of the memory 52 may be included in the controller 51. At least a portion of the memory 52 may be configured as a storage device separate from the information processing device 50, and may also be configured as at least a portion of the database 80.

The interface 53 may include a communication device configured to communicate in a wired or wireless way. The interface 53 is also referred to as a communication unit. The communication device may be configured to communicate according to a communication scheme based on any of various communication standards. The interface 53 can be configured according to known communication technology. A detailed description of the hardware and the like of the interface 53 is omitted. The functions of the interface 53 may be achieved by a single device or by a respectively separate device for each connection destination.

In the robot control system 1, the information processing device 50 may be configured as a server device. The server device may include at least one computer. The server device may cause a plurality of computers to execute parallel processing. The server device does not necessarily include a physical housing, and may also be configured on the basis of virtualization technology such as a virtual machine or a container orchestration system. The server device may also be configured using a cloud service. When configured using a cloud service, the server device may be configured by combining managed services. In other words, the functions of the information processing device 50 may be achieved as a cloud service.

The server device may include at least one server cluster. The server cluster functions as the controller 51. One server cluster may be present. Two or more server clusters may also be present. In the case of one server cluster, the functions achieved by the one server cluster encompass the functions achieved by each server cluster. The server clusters are communicatively connected to each other in a wired or wireless way.

The information processing device 50 is illustrated as a single configuration in FIGs. 1 and 2, but a plurality of configurations may be managed as a single system if necessary. In other words, the information processing device 50 is configured as a scalable platform. By using a plurality of configurations as the information processing device 50, even if one configuration becomes inoperable due to a natural disaster or other unforeseen event, the system will continue to operate using the other configuration(s). In this case, the plurality of configurations are interconnected by a wired and/or wireless channel and are capable of communicating with each other. The plurality of configurations may also be built across cloud and on-premises environments.

The information processing device 50 is connected to each of the terminal device 60 and the robot controller 11 by a wired and/or wireless channel, for example. The information processing device 50, the terminal device 60, and the robot controller 11 are mutually equipped with communication devices using a standard protocol, allowing for bidirectional communication. The information processing device 50 may also be included in the robot controller 11. The information processing device 50 may also be integrated with a storage device storing a control program, information pertaining to the robot 10, and the like.

### <Database 80>

The database 80 corresponds to a storage device configured separately from the information processing device 50. The database 80 may include an electromagnetic storage medium such as a magnetic disk, or a memory such as semiconductor memory or magnetic memory. The database 80 may be configured as an HDD, SSD, or the like. The database 80 itself may also include a processor. The processor of the database 80 may be the same and/or similar to the processor in the controller 51 of the information processing device 50. When the database 80 itself includes a processor, the database 80 may use the processor to manage control programs or various information mapped to control programs. The database 80 may store control programs for the robot 10, and may also store various information mapped to control programs as described later. The database 80 may also be in the cloud. Even when the database 80 is in the cloud, the information processing device 50 may be at a factory or other site. Note that the information processing device 50 and the database 80 may also be integrated.

The database 80 may include at least one database cluster. One database cluster may be present. Two or more database clusters may also be present. The number of database clusters may be increased or decreased, as appropriate, on the basis of the volume of data to be managed by the server device functioning as the information processing device 50 and the availability requirements of the server device functioning as the information processing device 50. The database cluster may be communicatively connected to the server device functioning as the information processing device 50 or to each server cluster in a wired or wireless way.

### <Terminal device 60>

The terminal device 60 may include at least one processor. The processor may be the same and/or similar to the processor in the controller 51 of the information processing device 50. The terminal device 60 may include a storage device. The storage device may be the same and/or similar to the memory 52 of the information processing device 50. The terminal device 60 may include a communication device. The communication device may be the same and/or similar to the interface 53 of the information processing device 50.

The terminal device 60 may include an output device to output information to a user and an input device to accept input from a user. The terminal device 60 may be configured to provide a graphical user interface (GUI).

The output device may include a display device. The display device may include a liquid crystal display (LCD), an organic electroluminescence (EL) display or inorganic EL display, a plasma display panel (PDP), or the like. The display device is not limited to these displays and may include any of various other types of displays. The display device may include a light-emitting device such as a light-emitting diode (LED). The display device may include any of various other devices. The output device may also include a speaker or other sound output device that outputs auditory information such as speech. The output device is not limited to these examples and may include any of various other devices.

The input device may include a touch panel or touch sensor, or a pointing device such as a mouse, for example. The input device may also include physical keys. The input device may also include a voice input device such as a microphone. The input device is not limited to these examples and may include any of various other devices.

The terminal device 60 may be configured as a tablet terminal. The terminal device 60 may be configured as a mobile phone terminal such as a feature phone or a smartphone. The terminal device 60 may be configured as a personal computer (PC) terminal such as a desktop PC or a laptop PC. The terminal device 60 is not limited to these examples and may be configured as any of various devices capable of providing a GUI and a communication function.

The terminal device 60 may be used by a user to perform a task of storing a program in the information processing device 50 in advance. The program may specify an action that the robot 10 is to perform. The terminal device 60 may also be used to monitor the state of the robot 10. The terminal device 60 is not limited to these examples and can provide any of various other functions. The terminal device 60 may also be provided as part of the robot controller 11. When the terminal device 60 is provided as part of the robot controller 11, the robot controller 11 itself may include an input device or an output device. The robot controller 11 may also be included in the terminal device 60.

### <Robot controller 11>

The robot controller 11 downloads a control program from the information processing device 50. The robot controller 11 executes a downloaded control program, thereby outputting information for controlling the action of the robot 10 to the robot 10 and causing the robot 10 to perform a task specified by the control program. The robot controller 11 may also execute a control program that the robot controller 11 itself retains. The robot controller 11 may cause the robot 10 to perform a task of moving a workpiece, for example. The robot controller 11 may cause the robot 10 to perform any of various tasks not limited to the above. The robot controller 11 may or may not be connected to a cloud computing environment. When the robot controller 11 is not connected to a cloud computing environment, the action of the robot controller 11 is completed in the on-premises environment. When the action of the robot controller 11 is completed in the on-premises environment, the action of the information processing device 50 is executed by the robot controller 11.

The robot controller 11 may include a communication device that downloads a control program from the information processing device 50. The communication device of the robot controller 11 may be the same and/or similar to the communication device of the information processing device 50. The robot controller 11 may include a processor that generates information for controlling the action of the robot 10 by executing a control program. The processor of the robot controller 11 may be the same and/or similar to the processor in the controller 51 of the information processing device 50.

In the configuration exemplified in FIG. 1, one robot controller 11 is connected to one robot 10. One robot controller 11 may also be connected to two or more robots 10. One robot controller 11 may control only one robot 10, or may control two or more robots 10. The robot controllers 11 and robots 10 are not limited to two, and may also number one, or number three or more. The robot controller 11 may also be unified with the information processing device 50 such that the function of the robot controller 11 is achieved as one function of the information processing device 50.

### <Robot 10>

The robot 10 may be configured as a robotic arm including an arm. The arm may be configured as a 6-axis or 7-axis vertical articulated robot, for example. The arm may also be configured as a 3-axis or 4-axis horizontal articulated robot, for example. The arm may also be configured as a 2-axis or 3-axis Cartesian robot. The arm may also be configured as a parallel link robot or the like. The number of axes forming the arm is not limited to the examples given.

The robot 10 may include an end effector attached to the arm. The end effector may include, for example, a grasping hand configured to grasp a work object. The grasping hand may have a plurality of fingers. The grasping hand may have two or more fingers. Each finger on the grasping hand may have one or more joints. The end effector may also include a suction hand configured to suction a work object. The end effector may also include a scooping hand configured to scoop up a work object. The end effector may also include a drill or other tool and may be configured to perform any of various machining actions, such as drilling a hole in a work object. The end effector is not limited to these examples and may be configured to perform any of various other actions.

The robot 10 can control the position of the end effector by actuating the arm. The end effector may have an axis that serves as a reference in the direction of action with respect to a work object. When the end effector has an axis, the robot 10 can control the direction of the end effector axis by actuating the arm. The robot 10 controls the start and end of an action to act on a work object. The robot 10 can move or machine a work object by controlling the action of the end effector while controlling the position of the end effector or the direction of the end effector axis.

The robot 10 may also be configured as an automated guided vehicle (AGV). The robot 10 may also be configured as a drone. The robot 10 is not limited to a robotic arm or AGV and may also be configured in any of various other forms, such as a vehicle, an electronic device, or a control machine. When the robot 10 is configured as an AGV, a drone, or the like, position information about the robot 10 may include position information about a location where the robot 10 is charged or a location where the robot 10 stands by.

The robot 10 may further include a sensor to detect the state of at least one configuration portion of the robot 10. The sensor may detect information about the real position or orientation of at least one configuration portion of the robot 10, or information pertaining to the velocity or acceleration of at least one configuration portion of the robot 10. The sensor may also detect a force acting on at least one configuration portion of the robot 10. The sensor may also detect a current flowing in, or the torque of, a motor used to drive at least one configuration portion of the robot 10. The sensor can detect information obtained as a result of an actual action by the robot 10. By acquiring a detection result from the sensor, the robot controller 11 can ascertain the result of an actual action by the robot 10.

Unlike a device that performs a certain task on a product and machines different types of products by being configured with conditions according to the type of product, the robot 10 is capable of generating a control program suited to a task, and can act to perform any of various tasks by generating control programs.

The robot 10 is mounted on the platform 13. The platform 13 is configured to move the robot 10 to a freely chosen location. The platform 13 includes the position information acquisition device 12. The position information acquisition device 12 acquires and outputs position information about the robot 10 to the information processing device 50. The position information acquisition device 12 may include a device that can acquire position information by using a satellite positioning system such as the Global Positioning System (GPS), for example. The position information acquisition device 12 may also include an Indoor MEssaging System (IMES) device, a radio-frequency identifier (RFID) device, wireless local area network (LAN) device, a Bluetooth^{®} Low Energy (BLE) device, or other device that can acquire position information.

### (Example of action of robot control system 1)

In the robot control system 1, the controller 51 of the information processing device 50 stores in the memory 52 a control program mapped to information identifying the control program, such as a program number, a program name, or a task name. The controller 51 also stores in the memory 52 operation data mapped to a control program. Operation data includes operation position information specifying a position where the robot 10 is to operate. Operation position information may include position information specifying a position (past position) where the robot 10 had been installed in the past. Position information specifying a past position is also referred to as past position information. Operation position information may include position information specifying a user-set position (set position) where the robot 10 is to operate. The set position may be set by a user. Position information specifying a set position is also referred to as set position information.

Operation data may include a time at which a control program was executed and information identifying the executed control program. Operation data may include operation history data in which a time at which a control program was executed, information identifying the executed control program, and position information about the robot 10 when the control program was executed are recorded in correspondence with one another. Position information about the robot 10 when a control program was executed that is included in operation history data corresponds to past position information about the robot 10. Position information about the first robot when a control program was executed corresponds to first past position information. First past position information may include position information about a robot of the same and/or similar type as the first robot when a control program was executed in a robot of the same and/or similar type as the first robot.

Operation data includes operation plan data in which a control program to be executed by the robot controller 11 and position information about the robot 10 when the control program is to be executed are recorded in correspondence with one another. Position information about the robot 10 when a control program is to be executed that is included in operation plan data corresponds to set position information. Position information about the first robot when a control program is to be executed corresponds to first set position information. First set position information may include position information about a robot of the same and/or similar type as the first robot when a control program is to be executed in a robot of the same and/or similar type as the first robot. Operation plan data may further include a combination of a plurality of control program to be executed by the robot controller 11 to control a plurality of robots 10.

The past position information (first past position information) in the operation history data and the set position information (first set position information) in the operation plan data are included in the operation position information in the operation data.

A user moves the robot 10 and robot controller 11 mounted on the platform 13 to a desired work location where the robot 10 is to perform a task. A user activates the robot 10 and robot controller 11 that have been moved to the work location. The robot 10 and robot controller 11 are connected to the network 40 upon activation. The robot controller 11 executes a control program specified by the information processing device 50. The robot controller 11 may download and execute a control program from the information processing device 50. The robot controller 11 may also execute a control program specified by the information processing device 50 from among control programs stored in advance in the robot controller 11 itself.

### <Operation history data>

When executing a control program, the robot controller 11 outputs the start and end times of the execution of the control program and information identifying the executed control program to the information processing device 50. The robot controller 11 acquires position information about the robot 10 from the position information acquisition device 12, and outputs the position information to the information processing device 50. Information that the robot controller 11 outputs to the information processing device 50 upon execution of a control program is also referred to as completion information. Information specifying the position where the robot 10 performed a task that is included in completion information is also referred to as completion position information.

Completion information may include not only completion position information but also information pertaining to the execution conditions of the control program. Information pertaining to execution conditions may include an execution frequency, the time of most recent execution, information identifying the robot 10 involved in the execution, or the like. Completion information may include information pertaining to a user who executed a control program. Information pertaining to a user may include information identifying an owner, administrator, activator, or user of the robot 10. Completion information may include information pertaining to an environment in which the robot 10 was caused to perform a task.

The controller 51 of the information processing device 50 records completion information acquired from the robot controller 11 as operation history data. Completion information pertaining to a task that the robot 10 performed in the past may be robot past information pertaining to the past of the robot 10. Position information specifying an installation location when the robot 10 performed a task in the past corresponds to past position information. Position information specifying an installation location when the first robot performed a task in the past corresponds to first past position information. First past position information may include position information specifying an installation location of a robot of the same and/or similar type as the first robot when a robot of the same and/or similar type as the first robot performed a task in the past.

Completion information may be generated automatically on the basis of a record of tasks that the robot 10 has performed, or may be generated on the basis of information entered by a user. For example, a user may enter information so that completion information is generated. In the generated completion information, a control program (PA) to be applied to a robot 10 (RA) and a control program (PB) to be applied to another robot 10 (RB) are each set at a certain time or period.

The robot control system 1 may cause a plurality of robots 10 to perform a task cooperatively. For example, multiple robots 10 placed into the same group may be present in a factory and perform a task cooperatively at the same time. A group of robots 10 may be formed by robots 10 connected to the same local network 20, or may be formed by dividing up robots 10 virtually.

When a plurality of robots 10 perform a task cooperatively, the robot controller 11 executes a control program so that the plurality of robots 10 perform a task cooperatively at the same time or in at least partially overlapping periods. A plurality of robot controllers 11 may each execute one control program to cause a robot 10 to perform a task. A single robot controller 11 may also each execute a plurality of control programs to cause a plurality of robots 10 to perform a task.

The robot controller 11 outputs to the information processing device 50 completion information about each of control programs executed at the same time or in at least partially overlapping periods. The controller 51 of the information processing device 50 records completion information about control programs executed at the same time or in at least partially overlapping periods as operation history data collected in the same group. For example, when multiple robots 10 placed into the same group are present in a factory and perform a task cooperatively at the same time, the controller 51 records completion information about control programs applied to cause each of the robots 10 to perform a task as operation history data collected in the same group.

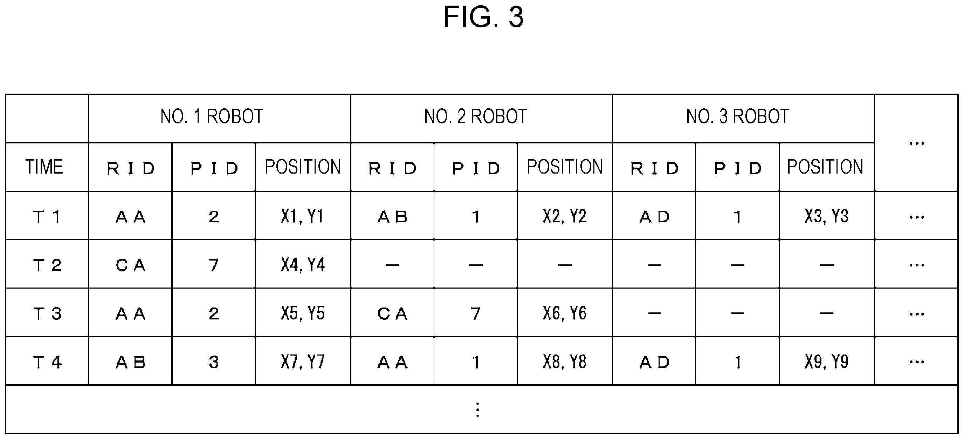

As exemplified in FIG. 3, the controller 51 stores operation history data in the memory 52. In FIG. 3, "time" is information pertaining to a time or period when a robot 10 performs a task. "RID" is information identifying the robot 10. "PID" is information identifying a control program that the robot controller 11 executed to control the robot 10. "Position" is position information about the robot 10 when the control program was executed. In FIG. 3, the position of the robot 10 is specified by (X, Y). X represents longitude. Y represents latitude. In other words, the position of the robot 10 is specified by latitude and longitude. The position of the robot 10 may be further specified by altitude. The position of the robot 10 is not limited to the above and may be specified by coordinates in any coordinate system.

The row with the time represented by T1 indicates that three robots 10 executed a task at the same time (T1) or in periods overlapping at least partially at the time (T1). A No. 1 robot 10 at the time (T 1) is identified by RID = AA. The No. 1 robot 10 at the time (T 1) is controlled by the control program identified by PID = 2. The No. 1 robot 10 at the time (T1) executed a task at the position represented by (X1, Y1). A No. 2 robot 10 at the time (T1) is identified by RID = AB. The No. 2 robot 10 at the time (T1) is controlled by the control program identified by PID = 1. The No. 2 robot 10 at the time (T1) executed a task at the position represented by (X2, Y2). ANo. 3 robot 10 at the time (T1) is identified by RID = AD. The No. 3 robot 10 at the time (T1) is controlled by the control program identified by PID = 1. The No. 3 robot 10 at the time (T1) executed a task at the position represented by (X3, Y3).

The row with the time represented by T2 indicates that one robot 10 executed a task. A No. 1 robot 10 at the time (T2) is identified by RID = CA. The No. 1 robot 10 at the time (T2) is controlled by the control program identified by PID = 7. The No. 1 robot 10 at the time (T2) executed a task at the position represented by (X4, Y4).

The row with the time represented by T3 indicates that two robots 10 executed a task at the same time (T3) or in periods overlapping at least partially at the time (T3). A No. 1 robot 10 at the time (T3) is identified by RID = AA. The No. 1 robot 10 at the time (T3) is controlled by the control program identified by PID = 2. The No. 1 robot 10 at the time (T3) executed a task at the position represented by (X5, Y5). A No. 2 robot 10 at the time (T3) is identified by RID = CA. The No. 2 robot 10 at the time (T3) is controlled by the control program identified by PID = 7. The No. 2 robot 10 at the time (T3) executed a task at the position represented by (X6, Y6).

The row with the time represented by T4 indicates that three robots 10 executed a task at the same time (T4) or in periods overlapping at least partially at the time (T4). A No. 1 robot 10 at the time (T4) is identified by RID = AB. The No. 1 robot 10 at the time (T4) is controlled by the control program identified by PID = 3. The No. 1 robot 10 at the time (T4) executed a task at the position represented by (X7, Y7). A No. 2 robot 10 at the time (T4) is identified by RID = AA. The No. 2 robot 10 at the time (T4) is controlled by the control program identified by PID = 1. The No. 2 robot 10 at the time (T4) executed a task at the position represented by (X8, Y8). A No. 3 robot 10 at the time (T4) is identified by RID = AD. The No. 3 robot 10 at the time (T4) is controlled by the control program identified by PID = 1. The No. 3 robot 10 at the time (T4) executed a task at the position represented by (X9, Y9).

The robots 10 described in a row for the same time in FIG. 3 may be seen as belonging to the same group. The information described in a row for the same time in FIG. 3 is information indicating an association between a robot 10 (first robot) and another robot or robots 10 that are under control to newly perform a task. This information is also referred to as group information.

### <Operation plan data>

A user may set a mapping between a control program to be executed by the robot controller 11 and the position of the robot 10 when the control program is to be executed. Specifically, a user may use the terminal device 60 to input a setting that maps a control program with a position of the robot 10. The controller 51 of the information processing device 50 may generate operation plan data on the basis of the input of a setting that maps a control program with a position of the robot 10. In the generated operation plan data, the control program and first set position information are recorded in correspondence with one another. Operation plan data may be represented in the same and/or similar form as operation history data.

### <Estimation of control program>

The controller 51 uses information pertaining to the robot 10 as a basis for estimating a control program (first control program) that the robot controller 11 is to execute to control the robot 10 (first robot) under control. In other words, the controller 51 estimates the first control program to apply to the first robot on the basis of information pertaining to the robot 10.

### <<Estimation based on position information>>

The controller 51 estimates the first control program from at least one control program recorded in the information processing device 50. The estimation is based on position information about the first robot (first position information) included in the first robot information.

The controller 51 acquires the first position information. The controller 51 estimates the first control program on the basis of a comparison between the first position information and operation position information included in operation data recorded in the memory 52 of the information processing device 50. Specifically, the controller 51 computes, for each control program, the distance from the position of the first robot to the operation position when the control program was executed. When the position of the robot 10 is represented by latitude and longitude, the controller 51 may compute the distance between two positions using the Hubeny formula. The controller 51 may compute the distance according to any of various methods not limited to the above.

The controller 51 extracts a control program for which the computed distance is a certain threshold or less, that is, a control program for which the operation position is within a certain distance from the position of the first robot. The controller 51 outputs the extracted control program to the terminal device 60 for display. The certain distance may be set, as appropriate, to a value such as 2 meters, for example.

In the example in FIG. 3, the operation position of the No. 1 robot 10 in the row with the time represented by T1 is assumed to be within the certain distance from the position of the first robot. In this case, the controller 51 estimates the first control program to be the control program identified by PID = 2 which was executed by the No. 1 robot 10 in the row with the time represented by T1. The operation position of the No. 1 robot 10 in the row with the time represented by T3 is assumed to be within the certain distance from the position of the first robot. In this case, too, the controller 51 estimates the first control program to be the control program identified by PID = 2 which was executed by the No. 1 robot 10 in the row with the time represented by T1. The controller 51 may display control programs such that if a control program is mapped to more completion information in which the operation position is within the certain distance from the position of the first robot, the controller 51 displays that control program higher. The controller 51 may rank control programs such that if a control program is mapped to more completion information in which the operation position is within the certain distance from the position of the first robot, the controller 51 assigns a higher ranking to that control program.

In other words, the controller 51 may estimate at least one first control program on the basis of the first position information and the first operation position information.

If the controller 51 is unable to acquire the first position information accurately, the controller 51 may estimate a control program on the basis of information pertaining to another robot 10 in the same group, and output the estimated control program to the terminal device 60 for display.

The controller 51 outputs at least one control program estimated on the basis of the first position information to the terminal device 60 for display, thereby presenting the at least one control program to a user. The user selects a control program to execute from the presented control program or programs. The user selects whether to execute or refuse a presented control program. The terminal device 60 accepts user selection input. When the control program to be executed is selected, the terminal device 60 outputs information identifying the selected control program to the robot controller 11. The robot controller 11 executes the selected control program and causes the robot 10 to perform a task.

When the robot controller 11 has executed a control program, the controller 51 may record completion information about the executed control program in the memory 52 as operation history data.

### <<Estimation based on in-progress information>>

The controller 51 acquires information pertaining to a control program that the robot controller 11 is currently executing as information pertaining to the robot 10. That is, the controller 51 acquires information pertaining to a task that the robot 10 is currently performing as information pertaining to the robot 10. Information pertaining to a task that the robot 10 is currently performing is also referred to as in-progress information.

The controller 51 searches the in-progress information and extracts the robot 10 that is currently performing a task, or preparing to perform a task, at the present time from among the robots 10 in the same group as the first robot. That is, the controller 51 searches for and extracts the robot controller 11 that is currently executing a control program, or preparing to execute a control program, at the present time from among the robot controllers 11 that control the robots 10 in the same group as the first robot.

When a robot controller 11 that controls a robot 10 in the same group as the first robot is currently executing a control program, or preparing to execute a control program, the controller 51 acquires information identifying the control program.

The controller 51 computes the combined number of the number of robots 10 extracted by search and the number of robots 10 (first robots) under control to newly perform a task as the number of robots 10 that are to cooperate. The controller 51 searches the operation data for a record in which the number of robots 10 that cooperated to perform a task is the same as the number of robots 10 that are to cooperate.

The controller 51 acquires information identifying the control program that is currently being executed, or being prepared to be executed, by the robot controller 11 that controls the robot 10 extracted by the search. When a plurality of robots 10 are extracted, the controller 51 acquires information identifying the control program to be applied to each robot 10. That is, the controller 51 acquires a combination of control programs that are currently being executed, or being prepared to be executed, in the same group. The controller 51 searches the operation history data and extracts data in which the same combination of control programs was executed.

As an example, suppose that two robots 10 are extracted by the search. Suppose that one robot 10 is to newly perform a task. In other words, suppose that three robots 10 are to perform a task cooperatively. Suppose that PID = 1 specifies the control program that is currently being executed, or being prepared to be executed, by the robot controller 11 that controls the two robots 10 extracted by the search.

In the operation history data in FIG. 3, the two pieces of data in the rows with the times T1 and T4 are extracted as data in which three robots 10 perform a task cooperatively. The two pieces of data in the rows with the times T1 and T4 are also extracted as data meeting the condition that PID = 1 identifies the control program to be applied to two of the three robots 10.

In the data in the row with the time T1, PID = 1 identifies the control program to be applied to the No. 2 and No. 3 robots 10. In the data in the row with the time T1, PID = 2 identifies the control program to be applied to the No. 1 robot 10. Consequently, the controller 51 estimates the control program identified by PID = 2 as the control program (first control program) to be applied to the robot 10 (first robot) under control that is to newly perform a task.

In the data in the row with the time T4, PID = 1 identifies the control program to be applied to the No. 2 and No. 3 robots 10. In the data in the row with the time T4, PID = 3 identifies the control program to be applied to the No. 1 robot 10. Consequently, the controller 51 also estimates the control program identified by PID = 3 as the control program (first control program) to be applied to the robot 10 (first robot) under control that is to newly perform a task.

In the example described above, the controller 51 estimates the control program identified by PID = 2 and the control program identified by PID = 3, and outputs the estimated control programs to the terminal device 60 for display.

The controller 51 outputs a control program estimated on the basis of in-progress information to the terminal device 60 for display, thereby presenting the control program to a user. The user selects a control program to execute from the presented control program or programs. The user selects whether to execute or refuse a presented control program. The terminal device 60 accepts user selection input. When the control program to be executed is selected, the terminal device 60 outputs information identifying the selected control program to the robot controller 11. The robot controller 11 executes the selected control program and causes the robot 10 to perform a task.

When the robot controller 11 has executed a control program, the controller 51 may record completion information about the executed control program in the memory 52 as operation history data.

### <<Brief summary>>

As described above, the controller 51 estimates the first control program on the basis of information pertaining to the robot 10. Information pertaining to the robot 10 includes position information about the first robot or in-progress information about a robot 10 in the same group as the first robot. The information pertaining to the robot 10 may include any of various other information not limited to the above. The controller 51 may perform the estimation of the first control program based on position information and the estimation of the first control program based on in-progress information separately or together. The controller 51 may also narrow down candidate first control programs by estimating the first control program on the basis of a plurality of information.

### (Example of procedure of information processing method)

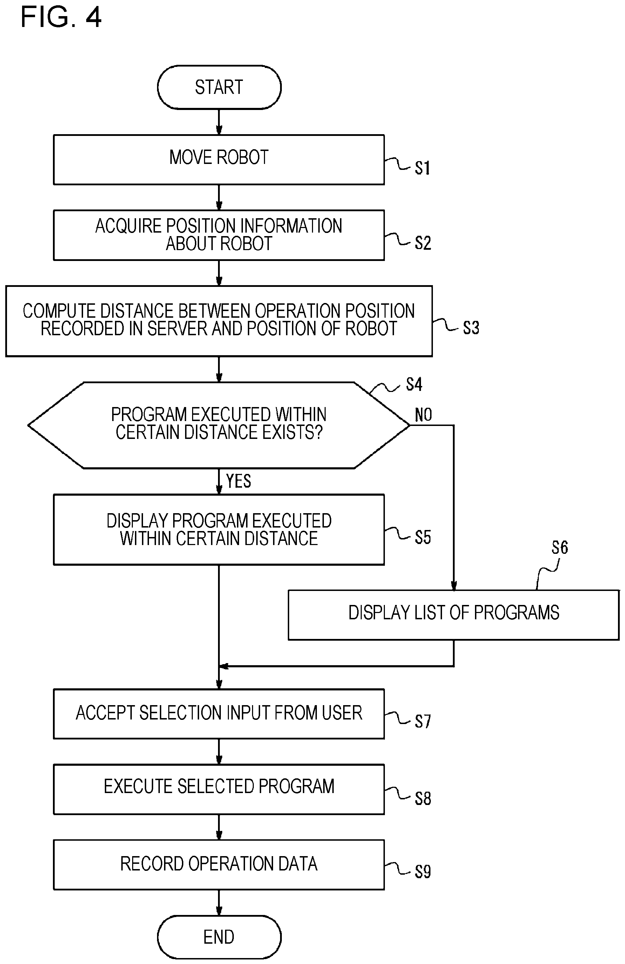

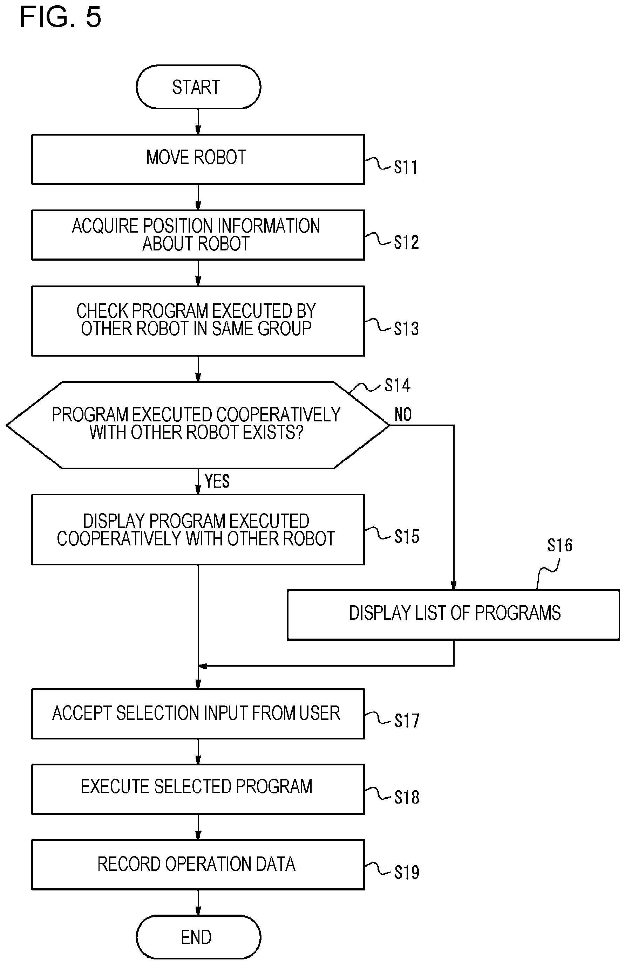

The robot control system 1 may execute an information processing method including the procedures of the flowcharts exemplified in FIGs. 4 and 5. The information processing method may be achieved as an information processing program to be executed by a processor included in the controller 51 of the information processing device 50. The information processing program may be stored in a non-transitory computer-readable medium.

The robot control system 1 can estimate the first program on the basis of information about the robot 10. Specifically, the robot control system 1 can estimate the first control program on the basis of position information by executing the procedure of the flowchart illustrated as an example in FIG. 4.

The robot control system 1 moves the robot 10 under control that is to newly perform a task to a work location (step S1). The robot 10 may be moved by a user. The robot 10 may be moved by the travel of the platform 13. The controller 51 acquires information about the robot 10 under control that is to newly perform a task (step S2). Specifically, in this example, the controller 51 acquires position information about the robot 10.

The controller 51 computes the distance between an operation position out of operation data recorded in the information processing device 50 and the position of the robot 10 (step S3). The controller 51 determines, on the basis of the computed distance, whether a control program executed within a certain distance exists (step S4).

If a control program with an operation position that is within the certain distance from the position of the robot 10 exists (step S4: YES), the controller 51 extracts the control program satisfying the condition, and causes the terminal device 60 to display the extracted control program (step S5). If a control program satisfying the condition does not exist (step S4: NO), the controller 51 causes the terminal device 60 to display a list of control programs stored in the memory 52 (step S6).

The controller 51 accepts input of a control program selection from the user (step S7). Specifically, the terminal device 60 accepts user input to select a control program. The controller 51 acquires the result of the selection of a control program by the user from the terminal device 60. The controller 51 causes the robot controller 11 to execute the selected control program (step S8). The controller 51 records completion information, including position information about the robot 10 when the control program was executed and the like, in the memory 52 as operation data (step S9). The controller 51 may also not execute the procedure in step S9. After executing the procedure in step S9, the controller 51 ends execution of the procedure of the flowchart in FIG. 4.

The robot control system 1 can estimate the first control program on the basis of operation data by executing the procedure of the flowchart exemplified in FIG. 5.

The robot control system 1 moves the robot 10 (first robot) under control that is to newly perform a task to a work location (step S11). The controller 51 acquires information about the robot 10 (first robot) under control that is to newly perform a task (step S12). In this example, the controller 51 acquires position information about the robot 10. The controller 51 checks the control program to be executed by another robot 10 in the same group as the robot 10 (first robot) that is to newly perform a task (step S13). That is, the controller 51 acquires operation data and checks the control program that is currently being executed, or being prepared to be executed, by another robot 10.

The controller 51 determines whether a control program executed cooperatively with another robot 10 exists in the operation data recorded in the information processing device 50 (step S14). If a control program executed cooperatively with another robot 10 exists (step S14: YES), the controller 51 extracts the control program, and causes the terminal device 60 to display the extracted control program (step S15). If a control program executed cooperatively with another robot 10 does not exist (step S14: NO), the controller 51 causes the terminal device 60 to display a list of control programs stored in the memory 52 (step S16).

The controller 51 accepts input of a control program selection from the user (step S17). The controller 51 causes the robot controller 11 to execute the selected control program (step S18). The controller 51 records completion information, including position information about the robot 10 when the control program was executed and the like, in the memory 52 as operation data (step S19). The controller 51 may also not execute the procedure in step S19. After executing the procedure in step S19, the controller 51 ends execution of the procedure of the flowchart in FIG. 5.

### (Summary)

As described above, in this embodiment, the robot control system 1 uses information about the robot 10 as a basis for estimating and extracting a control program that corresponds to a desired task that the robot 10 is to perform. In the case where the robot 10 is a robot that performs a task by being moved to a required location as needed, a control program is estimated and extracted in response to simply installing the robot 10 at a worksite. This arrangement may alleviate the burden on the user to select a control program. This arrangement may also lower the possibility of the user selecting the wrong control program. The result may be improved efficiency of cooperative tasks involving the robot 10.

The efficiency when using the robot 10 may be improved. The efficiency of cooperative tasks involving the robot 10 may be improved.

### (Other embodiments)

According to the present disclosure, the information processing device 50 of the robot control system 1 can use the first robot information as a basis for estimating at least one first control program to be executed by the robot controller 11 to cause the first robot to perform a task. The following describes portions that differ from the embodiment above. Note that the following embodiments may be carried out at the same time as, or separately from, the embodiment above.

### <Types of information>

Information pertaining to the robot 10 may include attribute information about the robot 10. Attribute information may include, for example, information specifying a type of hand or end effector attached to the robot 10, information specifying a configuration such as the number of arm joints, and information about the manufacturer of the robot 10. The inclusion of such attribute information enables prediction of a task by a robot 10 installed nearby, and by extension, prediction of a missing task among a series of tasks and estimation of the first control program for the first robot.

Information pertaining to the robot 10 may include information pertaining to a user who causes the robot 10 to perform a task. Information pertaining to a user may include information identifying an owner, administrator, activator, or user of the robot 10. Information pertaining to the robot 10 may also include information pertaining to an environment in which the robot 10 is caused to perform a task. The inclusion of such information pertaining to a user enables prediction of a task by a robot 10 installed nearby, and by extension, prediction of a missing task among a series of tasks and estimation of the first control program for the first robot.

The controller 51 of the information processing device 50 can estimate the first control program on the basis of at least one piece of information from among information about the robot 10 and operation data about the robot 10. The controller 51 may estimate the first control program on the basis of only one piece of information from among the above information. The controller 51 may estimate the first control program on the basis of information combining a plurality of information.

The controller 51 may estimate the first control program on the basis of information different from position information among information pertaining to the robot 10. Information different from position information among information pertaining to the robot 10 includes, for example, attribute information about the robot 10, information pertaining to a user, or information pertaining to an environment in which the robot 10 is caused to perform a task.

### <Group of robots 10>

The controller 51 may consider a plurality of robots 10 connected to the same local network 20 or network 40 to be robots 10 belonging to the same group. The local network 20 and the network 40 may include the Internet, an intranet, a communication network using Bluetooth^{®}, or a communication network using 4G, LTE, or 5G. The controller 51 is not limited to the above examples, and may consider robots 10 located on a certain floor to be robots 10 belonging to the same group, or consider robots 10 located on the same manufacturing line at a factory to be robots 10 belonging to the same group, for example. A connection from the robot 10 to the local network 20 or the network 40 may be achieved via the robot controller 11. The robot controller 11 may function as an edge computer.

For example, the controller 51 may consider the robot 10 (first robot) under control that is to newly perform a task and another robot 10 connected to the first robot via the local network 20 to be robots 10 belonging to the same group. The other robot 10 connected to the first robot via the local network 20 is also referred to as the second robot. In other words, the second robot is communicatively connected to the first robot. Information pertaining to the second robot is also referred to as second robot information. Second robot information includes second position information indicating an installation location of the second robot. The controller 51 compares the first and second position information, and when the second robot is installed within a certain range of the first robot, the controller 51 may estimate the first control program on the basis of the second robot information. The second robot may include a robot of the same and/or similar type as the first robot. The second robot may include a robot not of the same and/or similar type as the first robot. A robot not of the same and/or similar type as the first robot may include a robot of a different product than the first robot or a robot with a different number of operating axes than the first robot.

Note that in this embodiment, the second robot is communicatively connected to the first robot over the local network 20, via the information processing device 50 or the robot controller 111. The first and second robots may be communicatively connected directly in a wired or wireless way. The first and second robots may be communicatively connected via the robot controller 11 of the first robot and the robot controller 11 of the second robot in a wired or wireless way.

The controller 51 may compare the first and second position information to thereby confirm the positional relationship between the first and second robots and estimate the first control program on the basis of the confirmed positional relationship. For example, when the first and second robots are set up on the same production line, the controller 51 may estimate the first control program with consideration for whether the first robot is located upstream or downstream from the second robot on the production line.

The certain range may be set as a realistic range, such as a portion of a production line at a factory, a unit of a factory, or a unit of a site, for example. The certain range may also be set as a virtual range, such as a range connected to an intranet, for example.

The controller 51 may estimate the first control program on the basis of information other than the first position information (not on the basis of the first position information) among information pertaining to the first robot. The controller 51 may also estimate the first control program on the basis of information pertaining to the second robot. For example, the controller 51 may estimate the first control program on the basis of information pertaining to the second robot when the first and second robots have a common user.

The controller 51 may also estimate the first control program on the basis of operation data about the second robot.

The controller 51 may use group information as a basis for acquiring information pertaining to another robot 10 belonging to the same group as the first robot. Information pertaining to another robot 10 belonging to the same group as the first robot is also referred to as group robot information. The controller 51 may also estimate the first control program on the basis of acquired group robot information.

Group information may be included in at least one of operation data about the first robot or operation data about the second robot. In the case where the first robot and another robot 10 different from the first robot were performing tasks at the same time or in at least partially overlapping periods in the past, group information may include information indicating whether the same control program as the first robot was applied to the other robot 10. Group information may include information indicating whether the first robot and another robot 10 different from the first robot are set to cooperate.

The controller 51 may acquire third robot information pertaining to a third robot other than the second robot. The third robot is connected to the first robot via the local network 20. The controller 51 may acquire third position information indicating an installation location of the third robot. The controller 51 compares the first and third position information, and when the third robot is installed within a certain range of the first robot, the controller 51 may estimate the first control program on the basis of the second robot information and the third robot information. Note that the third robot may simply be communicatively connected to the first and second robots, in a manner similar to the communicative connection between the first and second robots. The third robot may include a robot of the same and/or similar type as the first robot or the second robot. The third robot may include a robot not of the same and/or similar type as both the first and second robots. A robot not of the same and/or similar type as both the first and second robots may include a robot of a different product than the first and second robots or a robot with a different number of operating axes than the first and second robots.

For example, when the same control program is applied to a plurality of other robots 10 located within a certain range of the first robot, the controller 51 may estimate the same control program as the first control program. The controller 51 acquires normal task information including a type of control program to be executed normally, the number of robots 10 normally caused to perform the same task, or the like. The controller 51 may acquire normal task information on the basis of operation data. The controller 51 may also record normal task information in the memory 52. The controller 51 may also estimate the first control program on the basis of acquired normal task information. The controller 51 may extract a missing control program on the basis of operation data and normal task information, and estimate the extracted control program as the first control program.

The controller 51 compares the first, second, and third position information, and when the second and third robots are installed within a certain range of the first robot, the controller 51 may estimate the first control program on the basis of the positional relationship between the second and third robots. For example, when the first, second, and third robots are set up on the same production line, the controller 51 may estimate the first control program with consideration for whether the first robot is located upstream, midstream, or downstream on the production line.

The controller 51 may acquire information pertaining to other production equipment connected to the same local network 20 or network 40. The controller 51 may also estimate the first control program on the basis of first robot information and information pertaining to other production equipment. For example, the controller 51 may acquire fourth position information indicating an installation location of production equipment. The controller 51 compares the first and fourth position information, and when the production equipment is installed within a certain range of the first robot, the controller 51 may estimate the first control program on the basis of a process by the production equipment. Note that information pertaining to other production equipment may be data pertaining to the operation of the production equipment, such as a user, a time of use, or an installation position of the production equipment. Information pertaining to other production equipment may also be attribute information about the production equipment, including information identifying the production equipment or information specifying a manufacturing process to be performed by the production equipment.

The controller 51 may estimate the first control progra by comparing setting data with operation data, the setting data and operation data each being position information indicated by latitude and longitude.

The controller 51 may also estimate the first control program on the basis of data different from position information. The controller 51 may also estimate the first control program on the basis of setting data and operation data different from position information. In this case, the controller 51 may also estimate the first control program on the basis of a control program applied to another robot at the same time, with the same user, or in the same group, for example.

The controller 51 may estimate the first control program on the basis of data different from position information or information pertaining to other production equipment, and then estimate the first control program on the basis of position information. The controller 51 may also use an estimation result based on position information as a basis for determining the output order or display order of first control programs estimated on the basis of data different from position information or information pertaining to other production equipment. Note that the controller 51 may also use an estimation result based on data different from position information or information pertaining to other production equipment as a basis for determining the output order or display order of first control programs estimated on the basis of position information.

In this embodiment, the controller 51 of the information processing device 50 estimates a control program on the basis of information about the robot 10. The controller 51 may also verify the suitability of a user-selected control program. For example, the controller 51 may determine that a user-selected control program is conforming when the user-selected control program matches a control program estimated on the basis of information about the robot 10 and operation data about the robot 10.

Upon successful extraction of a plurality of control programs on the basis of information about the robot 10, the controller 51 may cause the terminal device 60 to display the extracted control programs with a priority ranking assigned to each. For example, the controller 51 may assign a high priority ranking to a control program with a record of being executed recently going back from the time of extracting control programs. As another example, the controller 51 may assign a priority ranking to extracted control programs on the basis of a priority ranking that a user has assigned to operation data in advance. The controller 51 may also change the rules for assigning a priority ranking on the basis of a result of user selection from among control programs displayed with a priority ranking assigned. For example, the controller 51 may change the rules for assigning a priority ranking through retraining.

The foregoing describes embodiments of the robot control system 1, but in the present disclosure, an embodiment may also be achieved as a method or program for implementing a system or device, or as a storage medium (such as an optical disc, magneto-optical disc, CD-ROM, CD-R, CD-RW, magnetic tape, hard disk, or memory card, for example) in which a program is recorded. The program may be stored in a non-transitory computer-readable medium.

An embodiment in the form of a program is not limited to an application program such as object code compiled by a compiler or program code to be executed by an interpreter, and may also be in a form such as a program module incorporated into an operating system. The program may or may not be configured so that all processing is performed solely in a CPU on a control board. The program may also be configured to be implemented, in part or in full, by another processing unit mounted on an expansion board or expansion unit added to the board as needed.

The foregoing description of embodiments according to the present disclosure is based on the drawings and examples, but note that a person skilled in the art could make various variations or revisions on the basis of the present disclosure. Consequently, it should be understood that these variations or revisions are included in the scope of the present disclosure. For example, the functions and the like included in each component and the like may be rearranged in logically non-contradictory ways. A plurality of components or the like can be combined into one, or a single component can be divided.

In the present disclosure, all constituent features described herein and/or all methods or all steps of processes disclosed herein can be combined in any combinations, except for combinations in which these features would be mutually exclusive. Each of the features described in the present disclosure can be replaced by alternative features that work for the same, equivalent, or similar purposes, unless explicitly denied. Therefore, unless explicitly denied, each of the disclosed features is merely one example of a comprehensive series of same or equal features.

An embodiment according to the present disclosure is not limited to any of the specific configurations of the embodiments described above. In the present disclosure, embodiments can be extended to all novel features described herein or combinations thereof, or to all novel methods or processing steps described herein or combinations thereof.

In the present disclosure, qualifiers such as "first" and "second" are identifiers for distinguishing configurations. The numerals denoting the configurations distinguished by qualifiers such as "first" and "second" in the present disclosure are interchangeable. For example, the identifiers "first" and "second" may be interchanged between the first robot and the second robot. The identifiers are interchanged at the same time. The configurations are still distinguished after the interchange of the identifiers. The identifiers may be removed. The configurations with the identifiers removed therefrom are distinguished by signs. The description of identifiers such as "first" and "second" in the present disclosure shall not be used as a basis for interpreting the order of the configurations or the existence of identifiers with smaller numbers.

### REFERENCE SIGNS

- 1: robot control system
- 10: robot (12: position information acquisition device, 13: platform)
- 11: robot controller
- 20: local network
- 30: gateway device
- 40: network
- 50: server (51: controller, 52: memory, 53: interface)
- 60: terminal device

## Claims

1. An information processing device comprising:
a controller that estimates at least one first control program to control a first robot under control from at least one control program to control a robot which are recorded in a memory, wherein
the controller estimates the at least one first control program on the basis of first position information indicating an installation location of the first robot.

2. The information processing device according to claim 1, wherein
the controller is configured to
acquire operation position information about the robot from operation data about the robot, and
estimate the at least one first control program on the basis of the first position information and the operation position information.

3. The information processing device according to claim 2, wherein
the operation position information includes past position information when the control program was executed.

4. The information processing device according to any one of claims 1 to 3, wherein
the controller is configured to
acquire information different from the first position information and operation data about the first robot, and
estimate the at least one first control program on the basis of information pertaining to the first robot and the operation data.

5. The information processing device according to any one of claims 1 to 4, wherein
the controller is configured to
acquire information different from the first position information and operation data about the first robot, and
estimate the at least one first control program on the basis of the information different from the first position information and the operation data.

6. The information processing device according to any one of claims 1 to 5, wherein
the controller is configured to
acquire, from among information pertaining to a second robot communicatively connected to the first robot, second position information indicating an installation location of the second robot, and
compare the first and second position information, and when the second robot is installed within a certain range of the first robot, estimate the first control program on the basis of the information pertaining to the second robot.

7. The information processing device according to claim 6, wherein
the controller is configured to
acquire information different from the first position information and the information pertaining to the second robot, and
estimate the at least one first control program on the basis of the information pertaining to the first robot and the information pertaining to the second robot.

8. The information processing device according to claim 6 or 7, wherein
the controller is configured to
acquire operation data about the second robot, and
estimate the at least one first control program on the basis of the operation data about the second robot.

9. The information processing device according to any one of claims 6 to 8, wherein
the controller compares the first and second position information, and estimates the first control program on the basis of a positional relationship with the second robot.

10. The information processing device according to any one of claims 6 to 9, wherein
the controller is configured to
acquire, from among information pertaining to a third robot communicatively connected to the first robot, third position information indicating an installation location of the third robot, and
compare the first and third position information, and when the third robot is installed within a certain range of the first robot, estimate the first control program on the basis of the information pertaining to the second robot and the information pertaining to the third robot.

11. The information processing device according to any one of claims 6 to 10, wherein
the controller is configured to
acquire, from among information pertaining to a third robot communicatively connected to the first robot, third position information indicating an installation location of the third robot, and
compare the first position information with the and second and third position information, and when the second robot and the third robot are installed within a certain range of the first robot, estimate the at least one first control program on the basis of a positional relationship with the second robot and the third robot.

12. The information processing device according to any one of claims 1 to 11, wherein
the controller is configured to
acquire group information indicating an association between the first robot and another robot,
acquire, on the basis of the group information, group robot information pertaining to a robot belonging to the same group as the first robot, and
estimate the at least one first control program on the basis of the group robot information.

13. The information processing device according to claim 12, wherein
the group information
is included in at least one of operation data about the first robot or operation data about a second robot communicatively connected to the first robot, and
includes information indicating that another robot different from the first robot had been controlled by the same control program as the first robot at the same time in the past, or that the first robot and another robot different from the first robot are set to cooperate.

14. The information processing device according to any one of claims 1 to 13, wherein
the controller is configured to
output extracted control programs,
accept input by which a user selects one control program from among the extracted control programs, and
cause the first robot to execute the control program selected by the user as the first control program.

15. A robot controller that executes the first control program outputted from the information processing device according to any one of claims 1 to 14.

16. A robot control system comprising: the information processing device according to any one of claims 1 to 14; the robot controller according to claim 16; and the robot.

17. An information processing method comprising: estimating at least one first control program to control a first robot under control from at least one control program to control a robot which are recorded in an information processing device, the estimating being based on first position information indicating an installation location of the first robot.
